# EUROPEAN PATENT SPECIFICATION

(11) **EP 4 302 915 B1**
(45) Date of publication and mention of the grant of the patent: **01.10.2025**
(21) Application number: 22815705.3
(22) Date of filing: 31.03.2022
(51) Int. Cl.: B23K 9/26, B23K 9/32

(54) **CONTACT TIP REPLACEMENT DEVICE**
VORRICHTUNG ZUM AUSWECHSELN VON KONTAKTSPITZEN
DISPOSITIF DE REMPLACEMENT DE TUBE-CONTACT

(30) Priority: 01.06.2021 JP 2021092571
(43) Date of publication of application: 10.01.2024
(73) Proprietor: Tipman Co., Ltd., Miyoshi-shi, Aichi 470-0206 (JP)
(72) Inventor: HUYNH, Huu Thinh, Miyoshi-shi, Aichi 470-0206 (JP)
(74) Representative: Petraz, Gilberto Luigi
(86) International application number: PCT/JP2022/016444
(87) International publication number: WO 2022/254948

(56) References cited:
- EP-A1- 3 205 436
- WO-A1-2020/179853
- JP-A- 2001 105 134
- JP-A- 2013 013 929
- JP-A- 2017 205 792
- JP-A- 2017 205 792
- JP-U- H01 139 977
- JP-U- S60 108 479
- JP-U- S60 108 479
- US-A1- 2005 211 684
- US-A1- 2020 094 343

## Description

### BACKGROUND OF INVENTION

### Field of the Invention

The present invention relates to a contact tip replacement device that automatically replaces a contact tip screwed into a distal end of a torch body of a welding torch for arc welding.

### Background Art

A known contact tip replacement device described in, for example, Patent Literature 1 automatically replaces a contact tip screwed into a torch body of a welding torch. The contact tip replacement device includes a body having a substantially keyhole shape in a plan view. The body includes a contact-tip attaching assembly in an area at one end of the body to attach a contact tip to the torch body, and a contact-tip detaching assembly in an area at the other end of the body to detach a contact tip from the torch body.

Patent Literature 2, according to its abstract, describes a rotary changer configured to replace a nozzle or contact tip attached to a tip end portion of the torch body of a welding torch for use in arc welding. On an inner peripheral surface defining a through hole of a first rotator is provided a positioning means for bringing the center axis of a contact tip, housed in the through hole, into alignment with a rotational axis, or making the former axis proximate to the latter axis, by coming into contact with an outer peripheral surface of the contact tip.

### CITATION LIST

### PATENT LITERATURE

Patent Literature 1: WO 2017/179237
Patent Literature 2 : EP3205436A1

### SUMMARY OF INVENTION

### TECHNICAL PROBLEM

The contact tip replacement device described in Patent Literature 1 includes the contact-tip attaching assembly and the contact-tip detaching assembly separately at different positions in the horizontal direction of the contact tip replacement device and is thus large.

One or more aspects of the present invention are directed to a contact tip replacement device that can attach and detach a contact tip to and from a torch body of a welding torch and is compact.

### SOLUTION TO PROBLEM

In response to the above, the technique according to one or more aspects of the present invention allows a contact tip to be attached and detached in a single area.

More specifically, a contact tip replacement device that replaces a contact tip screwed into a torch body has the structure described below.

The contact tip replacement device according to a first aspect of the present invention is defined in claim 1, and includes a storage case that stores a plurality of contact tips linearly aligned in a horizontal direction and each having a tip end facing downward and a central axis extending vertically in the storage case, a reciprocator that reciprocates the storage case in a direction in which the plurality of contact tips are aligned to move the storage case into or out of a tip supplying space, a tip ejector that ejects a contact tip of the plurality of contact tips upward from the storage case moved into the tip supplying space, and a holder-rotator above the tip supplying space to laterally hold and release the contact tip ejected by the tip ejector. The holder-rotator rotates the contact tip about the center axis while holding the contact tip to screw the contact tip into the torch body or to detach the contact tip from the torch body.

A contact tip replacement device according to a second aspect of the present invention is the contact tip replacement device according to the first aspect of the present invention in which the reciprocator includes a slide that reciprocates in the horizontal direction, and the storage case is attachable to and detachable from the slide.

A contact tip replacement device according to a third aspect of the present invention is the contact tip replacement device according to the second aspect of the present invention in which the reciprocator includes a cylinder including a piston rod connected to the slide. The piston rod is extendable in a direction in which the slide slides. The piston rod is slidable to reciprocate the storage case.

A contact tip replacement device according to a fourth aspect of the present invention is the contact tip replacement device according to the third aspect of the present invention in which the cylinder is located laterally from the holder-rotator and above the slide.

A contact tip replacement device according to a fifth aspect of the present invention is the contact tip replacement device according to the first aspect of the present invention in which the tip ejector includes a rod having a rod centerline extending vertically and being extendable and retractable vertically. The storage case has, in an upper end of the storage case, an upper opening through which a contact tip of the plurality of contact tips is ejectable. The storage case has, at a position in a lower end of the storage case aligned with the upper opening, a lower opening connecting with an inside of the storage case to receive the rod being extended when the storage case is in the tip supplying space.

A contact tip replacement device according to a sixth aspect of the present invention is the contact tip replacement device according to the first aspect of the present invention in which the tip ejector is connected to the reciprocator and reciprocates in a same direction as the reciprocator in cooperation with the reciprocator reciprocating.

A contact tip replacement device according to a seventh aspect of the present invention is the contact tip replacement device according to the first aspect of the present invention in which the holder-rotator includes a first rotator, a second rotator, and a plurality of holders. The first rotator includes a holding operation space having a rotation axis extending vertically at a center of the holding operation space. The first rotator includes a plurality of fitting portions arranged about the rotation axis at equal intervals. The second rotator and the first rotator are rotatable relative to each other about the rotation axis. The plurality of holders are at positions corresponding to the plurality of fitting portions. Each of the plurality of holders is axially supported by the second rotator to pivot about a pivot shaft extending in a same direction as the rotation axis. Each of the plurality of holders includes a distal end including a pair of hooks spaced from each other circumferentially about the rotation axis and including a basal end portion loosely fitted in a corresponding fitting portion of the plurality of fitting portions. In response to the first rotator rotating relative to the second rotator in a first direction from a reference position, each of the plurality of fitting portions presses the basal end portion in the first direction and causes a corresponding holder of the plurality of holders to pivot in the first direction to cause one hook of the pair of hooks to move forward into the holding operation space to hold a contact tip of the plurality of contact tips. In response to the first rotator rotating relative to the second rotator in a second direction from the reference position, each of the plurality of fitting portions presses the basal end portion in the second direction and causes the corresponding holder to pivot in the second direction to cause another hook of the pair of hooks to move forward into the holding operation space to hold the contact tip of the plurality of contact tips.

A contact tip replacement device according to an eighth aspect of the present invention is the contact tip replacement device according to the first aspect of the present invention in which the storage case contains a tip storage to store the plurality of contact tips aligned and a pressing unit pressing the plurality of contact tips aligned in the tip storage toward one end of the storage case. The pressing unit includes a guide groove extending in the horizontal direction on an inner surface of the tip storage, a pressing member to be guided along the guide groove, and an urging member that urges the pressing member.

### ADVANTAGEOUS EFFECTS

In the first aspect, the contact tip screwed into the torch body is moved closer to the holder-rotator, is held by the holder-rotator, and is rotated about its centerline in the first direction to be detached from the torch body. When the contact tip detached from the torch body is released from the holder-rotator with the storage case retracted from the tip supplying space, the contact tip falls downward through the tip supplying space and is discarded. In contrast, the contact tip stored in the storage case moved into the tip supplying space by the reciprocator is ejected upward from the storage case by the tip ejector. The contact tip is then held laterally by the holder-rotator, with the torch body moved closer to the holder-rotator, and is rotated in the second direction about its centerline to be attached to the torch body. In the manner described above, the contact tip replacement device can attach and detach the contact tip at the same position and thus can be compact.

In the second aspect, when all the contact tips stored in the storage case are used after repeated replacement of the contact tips, the storage case can be easily replaced with a spare storage case prepared in advance. This facilitates loading of the contact tips on the replacement device, reducing the stop time of the replacement device and allowing an efficient operation of the replacement device.

In the third aspect, the simple structure is used for reciprocating the storage case and reduces the manufacturing cost of the replacement device.

In the fourth aspect, the cylinder as a drive source for reciprocating the storage case is located in an unused space. Thus, the replacement device can be more compact.

In the fifth aspect, when the rod in the tip ejector is extended with the storage case moved into the tip supplying space by the reciprocator, the rod presses the contact tip upward through the lower opening in the storage case, and the contact tip pressed by the rod protrudes from the upper opening in the storage case and reaches the holder-rotator. This simple structure can sequentially eject the contact tips stored in the storage case.

In the sixth aspect, the tip ejector can be moved to a position at which the tip ejector does not interfere with the contact tip falling from the holder-rotator to be discarded. The tip ejector can be moved using the reciprocator that reciprocates the storage case, without adding a dedicated drive source for moving the tip ejector, reducing the cost of the replacement device.

In the seventh aspect, when the contact tip is placed in the holding operation space with the first and second rotators at their reference positions and then the first rotator rotates relative to the second rotator in the first direction, one hook on each of the holders moves forward into the holding operation space to hold the contact tip, and the first and second rotators rotate integrally in the first direction about the centerline of the contact tip. When the contact tip is placed in the holding operation space with the first and second rotators at their reference positions and then the first rotator rotates relative to the second rotator in the second direction, the other hook on each of the holders moves forward into the holding operation space to hold the contact tip, and the first and second rotators rotate integrally in the second direction about the centerline of the contact tip. In the manner described above, the contact tip can be held independently of the direction in which the first rotator rotates relative to the second rotator. The first and second rotators can rotate about the centerline of the held contact tip while holding the contact tip. Thus, the contact tip can be attached to and detached from the torch body by the holder-rotator alone.

In the eighth aspect, when one contact tip is ejected from the storage case, the pressing member is guided with an urging force from the urging member along the guide groove and moves to press the contact tips in the storage case in the direction in which the contact tips are aligned. Thus, the contact tips in the storage case are aligned without gaps between them when one contact tip is ejected from the storage case. This structure can efficiently prepare the contact tip to be supplied next.

### BRIEF DESCRIPTION OF THE DRAWINGS

FIG. 1 is a perspective view of a contact tip replacement device according to an embodiment of the present invention.
FIG. 2 is a partial cross-sectional view of the contact tip replacement device, showing a tip case removed from a body of the contact tip replacement device.
FIG. 3 is a cross-sectional view of the tip case.
FIG. 4 is a cross-sectional view taken along line IV-IV in FIG. 1.
FIG. 5 is a cross-sectional view taken along line V-V in FIG. 4.
FIG. 6 is a view of the tip case corresponding to FIG. 4 immediately before a contact tip is detached from a torch body.
FIG. 7 is a cross-sectional view taken along line VII-VII in FIG. 6.
FIG. 8 is a view of the tip case immediately after the contact tip is detached from the torch body after the state in FIG. 7.
FIG. 9 is a view of the tip case immediately before a contact tip is attached to the torch body after the state in FIG. 8.
FIG. 10 is a view of the tip case when the contact tip is being attached to the torch body after the state in FIG. 9.
FIG. 11 is a cross-sectional view taken along line XI-XI in FIG. 10.
FIG. 12 is a view of the tip case immediately after the contact tip is attached to the torch body after the state in FIG. 10.

### DETAILED DESCRIPTION

One or more embodiments of the present invention will now be described in detail with reference to the drawings. The embodiments described below are mere examples.

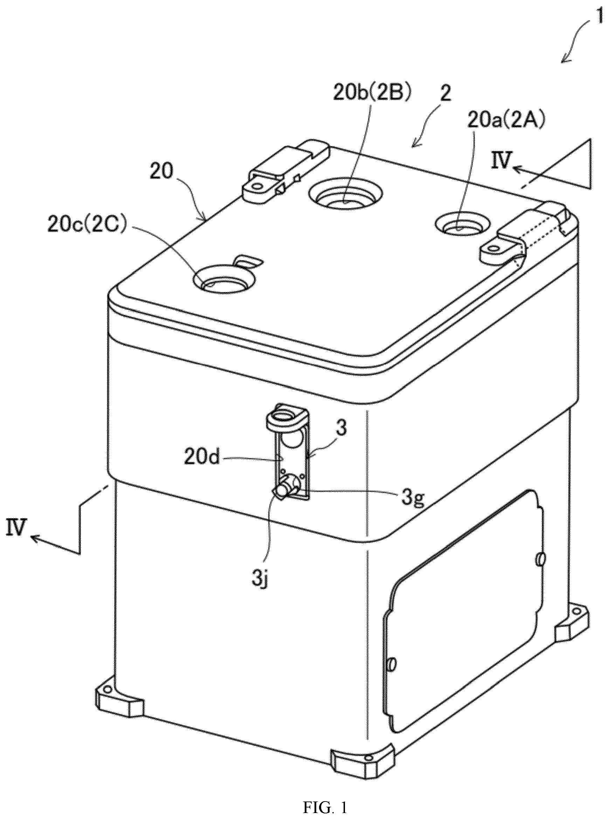

FIG. 1 shows a contact tip replacement device 1 according to an embodiment of the present invention. The contact tip replacement device 1 automatically replaces a used contact tip 10 attached to a welding torch (not shown) for arc welding with a new contact tip 10. The contact tip replacement device 1 includes a body 2 including a box-shaped housing 20, and a tip case 3 (a storage case) attachable to and detachable from the body 2.

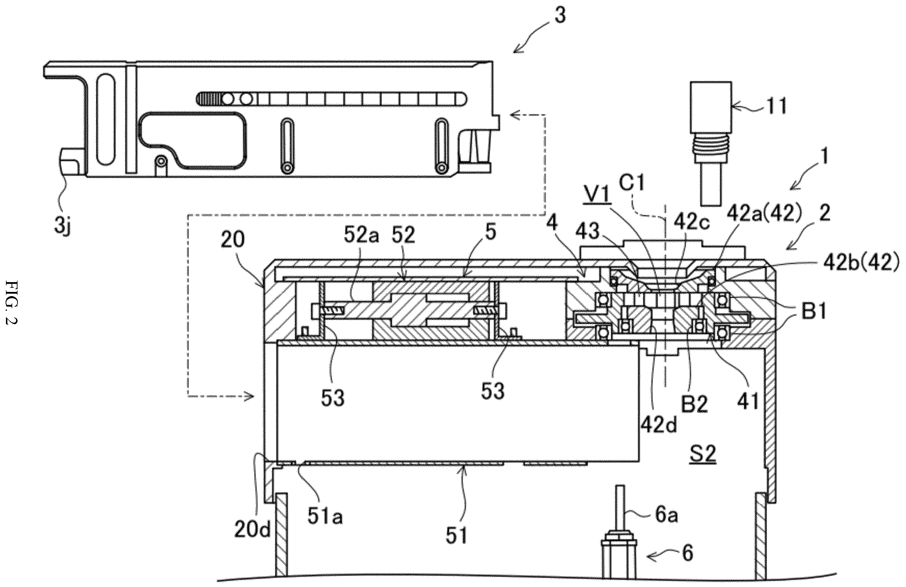

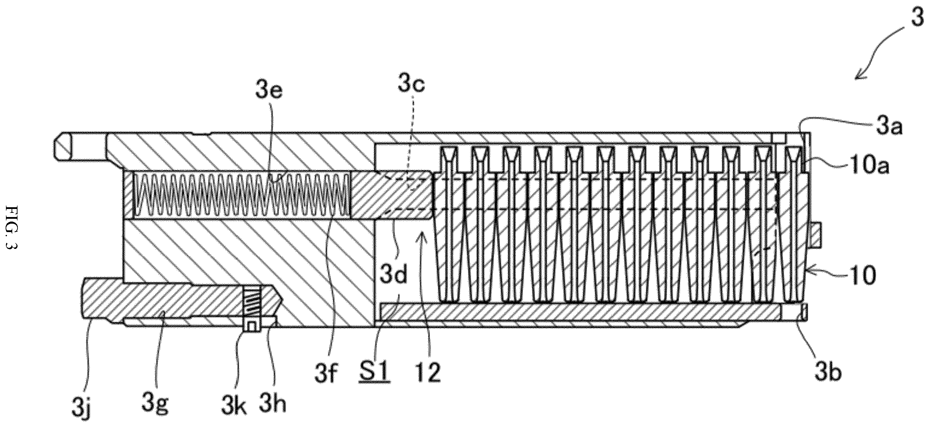

As shown in FIGs. 2 and 3, the tip case 3 is a plate with a thickness and is used with its length extending horizontally and its plate faces extending vertically.

The tip case 3 defines a tip storage S1 extending from a first end of the tip case 3 in the longitudinal direction to its middle. The tip storage S1 can store multiple contact tips 10 aligned linearly in the horizontal direction with their central axes extending vertically and their tip ends facing downward.

The tip case 3 has, in a first end of its upper end surface in the longitudinal direction, an upper opening 3a through which a contact tip 10 is ejectable with its external thread 10a preceding, and, at a position in its lower end surface aligned with the upper opening 3a, a lower opening 3b connecting with the tip storage S1.

The tip case 3 has, in an upper portion of its internal surface corresponding to the tip storage S1, a guide groove 3c linearly extending in the horizontal direction and having a recessed cross section. The guide groove 3c can guide a substantially cylindrical pressing member 3d having its centerline extending in the horizontal direction.

The tip case 3 includes, in its upper area at a second end of the tip case 3 in the longitudinal direction, a spring container 3e extending in the horizontal direction to receive the pressing member 3d in a fitted manner. The spring container 3e has an opening aligned with the guide groove 3c in the tip storage S1.

The spring container 3e accommodates a coil spring 3f (urging member) urging the pressing member 3d toward the first end of the tip case 3 in the longitudinal direction.

The guide groove 3c, the pressing member 3d, and the coil spring 3f are included in a pressing unit 12 in the present invention. The pressing unit 12 presses one or more contact tips 10 stored in the tip storage S1 toward the first end of the tip case 3.

The tip case 3 has, in its lower area at the second end of the tip case 3 in the longitudinal direction, a fitting recess 3g extending in the horizontal direction and open in the horizontal direction. The fitting recess 3g has an opening 3h connecting with the outside of the tip case 3 in an inward portion of its bottom surface.

The fitting recess 3g receives a lock member 3j being a thin rod with the centerline extending in the horizontal direction in a fitted manner.

The lock member 3j has, near its distal end, a protrusion 3k protruding outward and, on its basal end, a portion protruding from the fitting recess 3g, with which the lock member 3j is operable.

When the lock member 3j is rotated in a first direction, the protrusion 3k protrudes downward from the lower surface of the tip case 3 through the opening 3h. When the lock member 3j is rotated in a second direction, the protrusion 3k is retracted into the tip case 3 through the opening 3h.

The housing 20 has, in an area on its upper surface at a first end of the housing 20 in the width direction and at the first end of the housing 20 in the longitudinal direction, a circular first through-hole 20a connecting with the inside of the housing 20, and, in areas on its upper surface at a second end of the housing 20 in the width direction, a circular second through-hole 20b and a circular third through-hole 20c connecting with the inside of the housing 20 and arranged at a predetermined distance in the longitudinal direction of the housing 20.

The housing 20 includes, in an upper portion of its side surface at the second end of the housing 20 in the longitudinal direction, a case attachment slit 20d being a slit and connecting with the inside of the housing 20. The case attachment slit 20d defines the slit corresponding to a cross section of the tip case 3 taken orthogonally to the longitudinal direction of the tip case 3.

The housing 20 accommodates a contact tip replacing unit 2A that attaches and detaches the contact tip 10, a nozzle attachment unit 2B that attaches and detaches a nozzle (not shown) to and from a torch body 11 in the welding torch, and a torch cleaner 2C that cleans the welding torch. The contact tip replacing unit 2A is at a position corresponding to the first through-hole 20a and the case attachment slit 20d. The nozzle attachment unit 2B is at a position corresponding to the second through-hole 20b. The torch cleaner 2C is at a position corresponding to the third through-hole 20c.

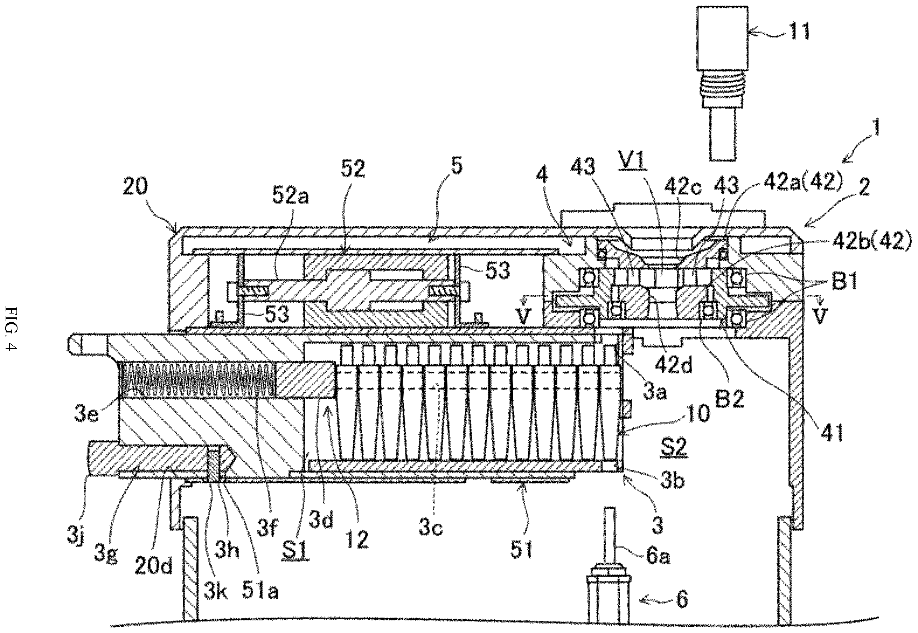

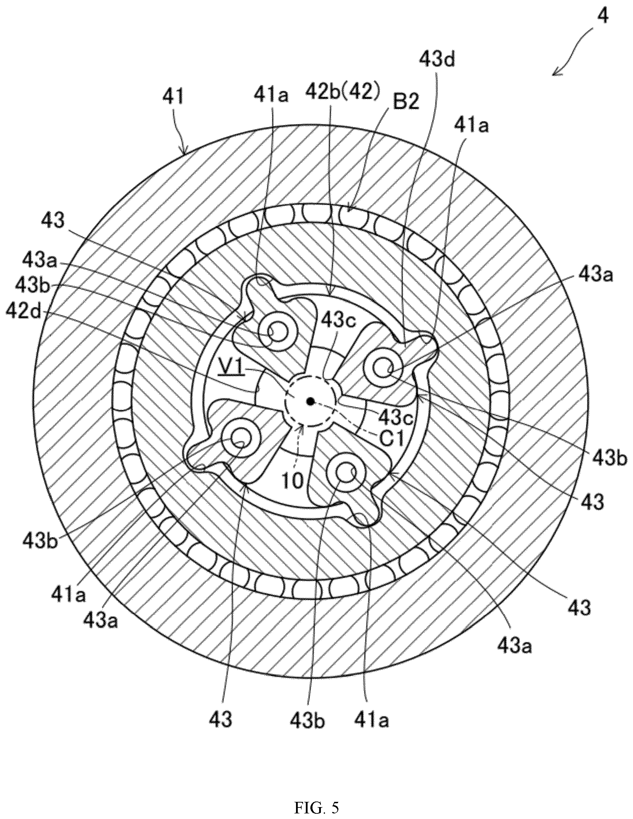

As shown in FIGs. 4 and 5, the contact tip replacing unit 2A includes a holder-rotator 4 that holds and rotates the contact tip 10, a reciprocator 5 that reciprocates the tip case 3, and a tip ejector 6 that ejects the contact tip 10 from the tip case 3.

The reciprocator 5 includes a slide 51 having a substantially C-shaped cross section and extending in the longitudinal direction of the housing 20 from a portion in the housing 20 corresponding to the case attachment slit 20d. When the tip case 3 is inserted into the housing 20 through the case attachment slit 20d, the tip case 3 moves into the slide 51.

The slide 51 has, in a portion of its bottom surface near the case attachment slit 20d in, a connection port 51a that connects the inside and the outside of the slide 51. When the tip case 3 is inserted into the slide 51 and the lock member 3j is rotated in the first direction, the protrusion 3k protrudes from the lower surface of the tip case 3 and is received in the connection port 51a, thus fastening the tip case 3 to the slide 51.

In other words, the tip case 3 can be attached to or detached from the slide 51 by inserting the tip case 3 into the slide 51 and rotating the lock member 3j.

A double-rod cylinder 52 is located above the slide 51 in the housing 20. The cylinder 52 includes a piston rod 52a extending in the longitudinal direction of the housing 20.

A suspension bracket 53 having an L shape in a side view is attached to each end of the piston rod 52a. Each suspension bracket 53 suspends the slide 51. The cylinder 52 is connected to the slide 51 with the suspension brackets 53.

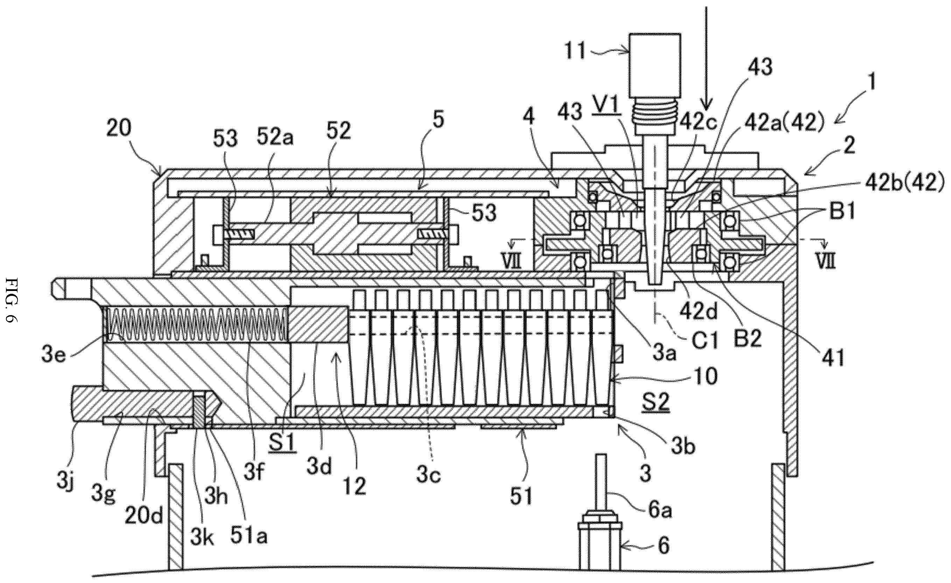

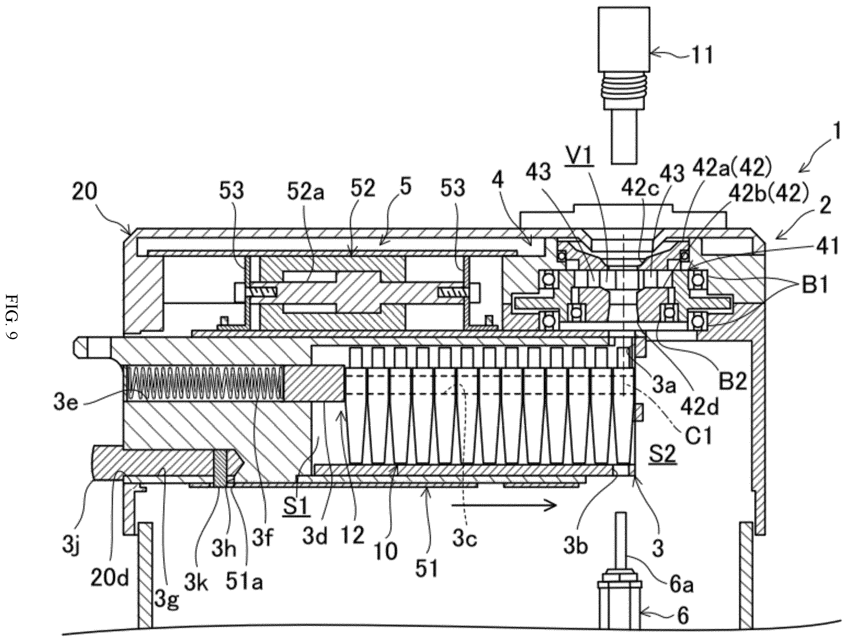

As shown in FIGs. 6 and 9, the tip case 3 fastened to the slide 51 slides in the longitudinal direction of the housing 20 as the piston rod 52a moves.

In other words, the reciprocator 5 reciprocates the tip case 3 in the direction in which the contact tips 10 are aligned to move the tip case 3 into or out of a tip supplying space S2 defined in an area of the housing 20 at the first end of the housing 20 in the longitudinal direction.

The tip ejector 6 is located below the slide 51 and nearer the tip supplying space S2, and connected to the reciprocator 5 to reciprocate in the same direction as the reciprocator 5 in cooperation with the reciprocator 5 that is reciprocating.

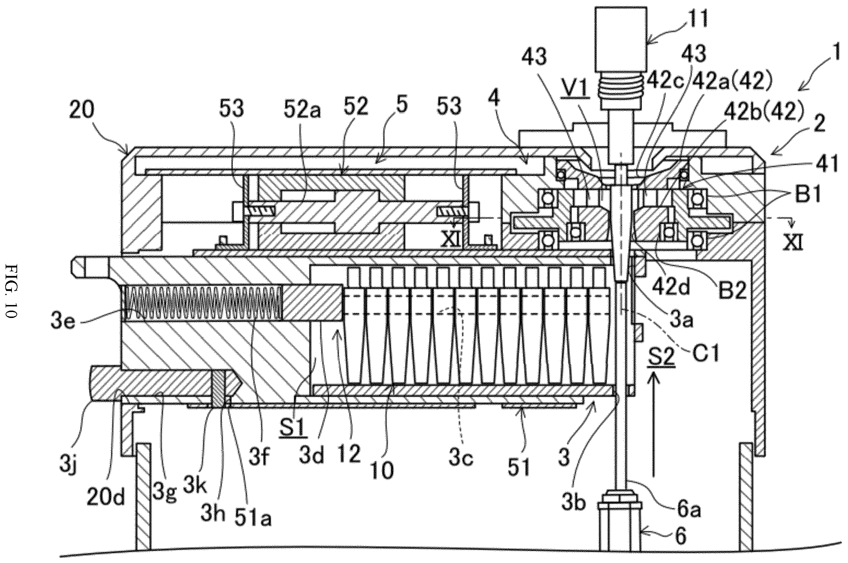

The tip ejector 6 includes a rod 6a that has the rod centerline extending vertically and is extendable and retractable vertically. When the slide 51 moves to place the tip case 3 into the tip supplying space S2 and the rod 6a is extended, as shown in FIG. 10, the rod 6a is received in the lower opening 3b in the tip case 3 to lift the contact tip 10 located at the first end of the tip case 3 in the longitudinal direction to eject the contact tip 10 through the upper opening 3a upward from the tip case 3.

The holder-rotator 4 is located below the first through-hole 20a and above the tip supplying space S2. The holder-rotator 4 can laterally hold and release the contact tip 10 ejected by the tip ejector 6 with the tip end of the contact tip 10 facing downward.

The holder-rotator 4 is located laterally from the cylinder 52. The holder-rotator 4 includes a holding operation space V1 immediately below the first through-hole 20a.

The holder-rotator 4 includes a follower gear 41 (first rotator) and a rotation disk 42 (second rotator) having a vertically extending rotation axis C1 at the center of the holding operation space V1. The follower gear 41 is axially supported by a frame of the body 2 through bearings B1.

The follower gear 41 and the rotation disk 42 are rotatable relative to each other about the rotation axis C1 with bearings B2.

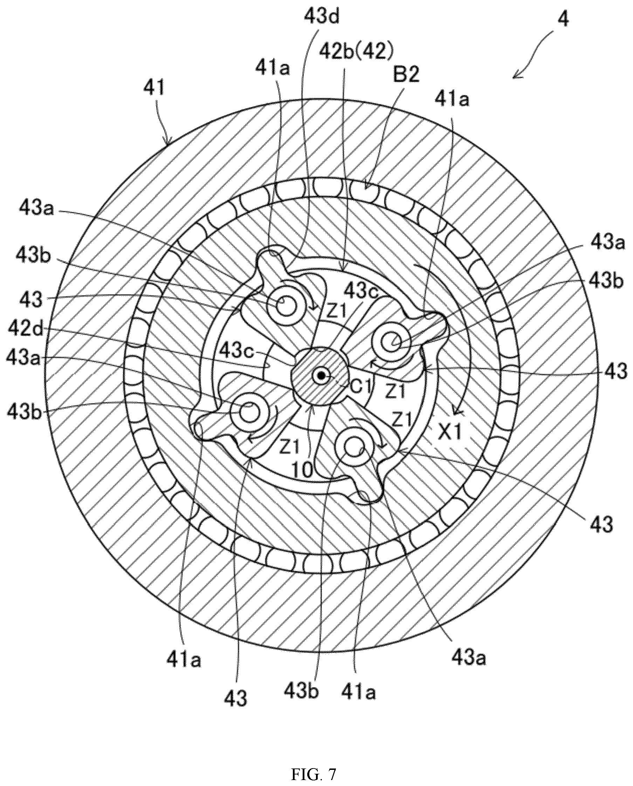

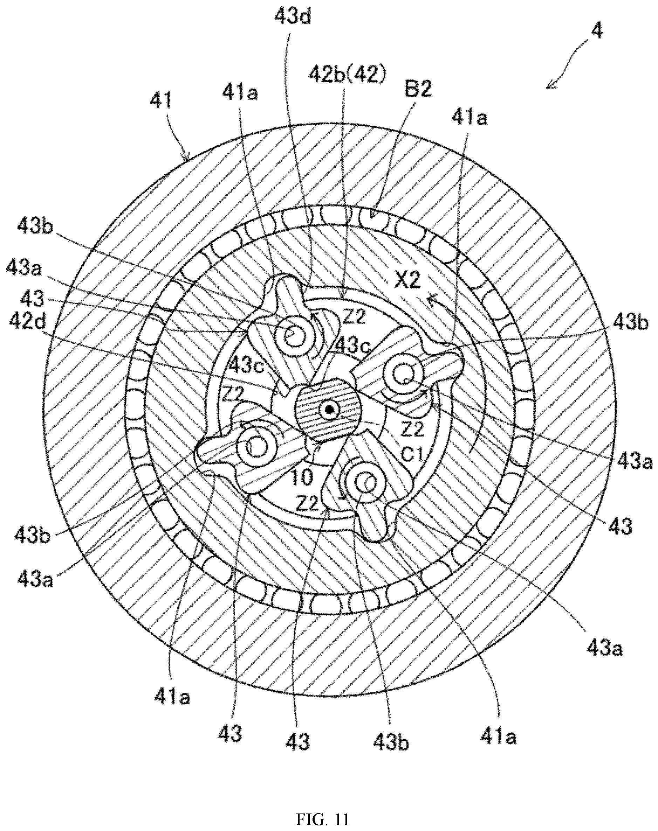

When a drive motor (not shown) rotates forward, the follower gear 41 rotates in the first direction (X1 direction) through a drive gear as shown in FIG. 7. When the drive motor rotates reversely, the follower gear 41 rotates in the second direction (X2 direction) through the drive gear as shown in FIG. 11.

As shown in FIG. 5, the follower gear 41 is substantially a ring and includes, on its inner circumferential surface, four fitting portions 41a recessed inward from the inner surface of the follower gear 41 at circumferentially equal interval about the rotation axis C1.

The rotation disk 42 includes an upper disk 42a above the follower gear 41 and a lower disk 42b inward from the follower gear 41.

The upper disk 42a is substantially a disk and has, at its center, a circular upper tip through-hole 42c corresponding to the holding operation space V1.

The lower disk 42b has, at its center, a circular lower tip through-hole 42d corresponding to the holding operation space V1.

To increase resistance between the upper disk 42a and the follower gear 41, a leaf spring (not shown) is between the upper disk 42a and the follower gear 41.

As shown in FIG. 5, four holders 43 each having a substantially arrow shape in a plan view are located inward from the follower gear 41 and between the upper disk 42a and the lower disk 42b. The holders 43 are at positions corresponding to the fitting portions 41a.

Each holder 43 has a through-hole 43a substantially in its center. The through-hole 43a receives a pivot shaft 43b extending in the same direction as the rotation axis C1.

Each pivot shaft 43b has ends fastened to the upper disk 42a and the lower disk 42b. The holders 43 are axially supported by the rotation disk 42 to be pivotable about the respective pivot shafts 43b.

Each holder 43 includes has, at its distal end, a pair of hooks 43c protruding toward the holding operation space V1 and spaced from each other circumferentially about the rotation axis C1.

Each holder 43 includes, in the middle of its basal end, a basal end portion 43d protruding in a direction opposite to the holding operation space V1. The basal end portion 43d is loosely fitted in the corresponding fitting portion 41a.

When, as shown in FIG. 6, the drive motor (not shown) rotates forward with the contact tip 10 placed in the holding operation space V1, the follower gear 41 rotates relative to the rotation disk 42 in the first direction (X1 direction) as shown in FIG. 7. In cooperation with this, the fitting portions 41a press the basal end portions 43d in the first direction to cause the holders 43 to pivot in the first direction (Z1 direction), moving a first hook 43c of each pair of the hooks 43c forward into the holding operation space V1 to hold the contact tip 10.

When, with the contact tip 10 held by the first hooks 43c on the holders 43, the drive motor (not shown) rotates further forward and the torch body 11 is moved closer, the external thread 10a on the contact tip 10 is unscrewed from an internal thread (not shown) on the torch body 11, detaching the contact tip 10 from the torch body 11.

When the drive motor (not shown) rotates reversely after the contact tip 10 is attached to the torch body 11, the follower gear 41 rotates relative to the rotation disk 42 in the second direction (X2 direction). In cooperation with this, the fitting portions 41a press the basal end portions 43d in the second direction to cause the holders 43 to pivot in the second direction (Z2 direction), moving the first hooks 43c backward from the holding operation space V1. This causes the contact tip 10 to fall from the holding operation space V1 and be discarded.

In contrast, when the drive motor (not shown) rotates reversely with the contact tip 10 lifted upward by the tip ejector 6 from the tip case 3 into the holding operation space V1 as shown in FIG. 10, the follower gear 41 rotates relative to the rotation disk 42 in the second direction (X2 direction) as shown in FIG. 11. In cooperation with this, the fitting portions 41a press the basal end portions 43d in the second direction to cause the holders 43 to pivot in the second direction, moving a second hook 43c of each pair of the hooks 43c forward into the holding operation space V1 to hold the contact tip 10.

When, with the contact tip 10 held by the second hooks 43c on the holders 43, the torch body 11 is moved closer to the holding operation space V1 to come in contact with the external thread 10a on the contact tip 10 and the drive motor (not shown) rotates further reversely, the external thread 10a on the contact tip 10 screws into the internal thread (not shown) on the torch body 11 to screw the contact tip 10 on the torch body 11.

When the drive motor (not shown) rotates forward after the contact tip 10 is attached to the torch body 11 with the contact tip 10 held by the second hooks 43c on the holders 43, the follower gear 41 rotates relative to the rotation disk 42 in the first direction (X1 direction). In cooperation with this, the fitting portions 41a press the basal end portions 43d in the first direction to cause the holders 43 to pivot in the first direction, moving the second hooks 43c backward from the holding operation space V1 to release the contact tip 10.

The nozzle attachment unit 2B in the present embodiment has the same structure as the holder-rotator 4 except a rotating operation to attach and detach a nozzle cap (not shown) to and from the torch body 11, and is thus not described in detail. The torch cleaner 2C has a known structure in the technical field and is thus not described in detail.

Replacement of the contact tip 10 using the contact tip replacement device 1 will now be described in detail.

As shown in FIG. 6, a used contact tip 10 attached to the torch body 11 is first moved and placed, from above, in the holding operation space V1 in the holder-rotator 4.

With the used contact tip 10 placed in the holding operation space V1, the drive motor (not shown) rotates forward to cause the follower gear 41 to rotate relative to the rotation disk 42 in the first direction (X1 direction). In cooperation with the follower gear 41 rotating relative to the rotation disk 42 in the first direction, as shown in FIG. 7, the fitting portions 41a press the basal end portions 43d in the first direction to cause the holders 43 to rotate in the first direction (Z1 direction). This moves the first hooks 43c forward into the holding operation space V1 to hold the contact tip 10.

With the contact tip 10 held by the holders 43, the drive motor rotates further forward to cause the contact tip 10 to rotate in the first direction and be detached from the torch body 11.

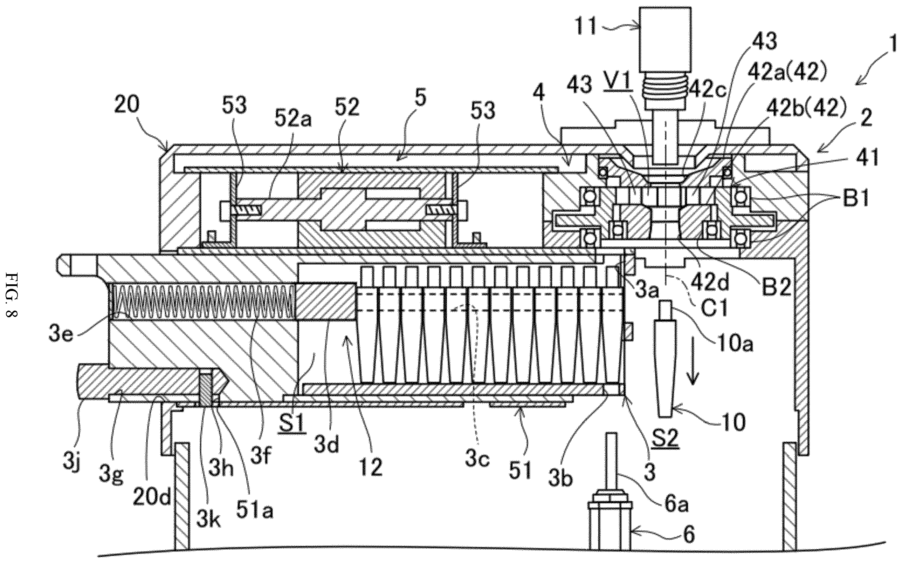

The drive motor then rotates reversely to cause the follower gear 41 to rotate relative to the rotation disk 42 in the second direction. Then, as shown in FIG. 8, in cooperation with the follower gear 41 rotating relative to the rotation disk 42 in the second direction, the fitting portions 41a press the basal end portions 43d in the second direction to cause the holders 43 to pivot in the second direction. This moves the first hooks 43c backward from the holding operation space V1 to release the contact tip 10, which then falls from the holding operation space V1 and is discarded.

Subsequently, the cylinder 52 is operated to slide the piston rod 52a toward a first end of the cylinder 52. This causes, as shown in FIG. 9, the slide 51 to move toward the first end and move the tip case 3 into the tip supplying space S2.

The tip ejector 6 is then operated to extend the rod 6a. This causes, as shown in FIG. 10, the rod 6a to move into the tip case 3 through the lower opening 3b in the tip case 3 and lift an unused contact tip 10 located at the first end of the tip case 3 in the longitudinal direction. This causes the contact tip 10 to be ejected upward through the upper opening 3a and placed in the holding operation space V1.

The drive motor (not shown) then rotates reversely to cause the follower gear 41 to rotate relative to the rotation disk 42 in the second direction (X2 direction). As shown in FIG. 11, in cooperation with the follower gear 41 rotating relative to the rotation disk 42 in the second direction, the fitting portions 41a then press the basal end portions 43d in the second direction to cause the holders 43 to pivot in the second direction (Z2 direction). This moves the second hooks 43c forward into the holding operation space V1 to hold the contact tip 10.

With the contact tip 10 held by the holders 43, the torch body 11 is moved closer to the holding operation space V1 from above to come in contact with the external thread 10a on the contact tip 10 held by the holders 43, and the drive motor (not shown) further rotates reversely. This causes the contact tip 10 to rotate in the second direction to be screwed into the torch body 11.

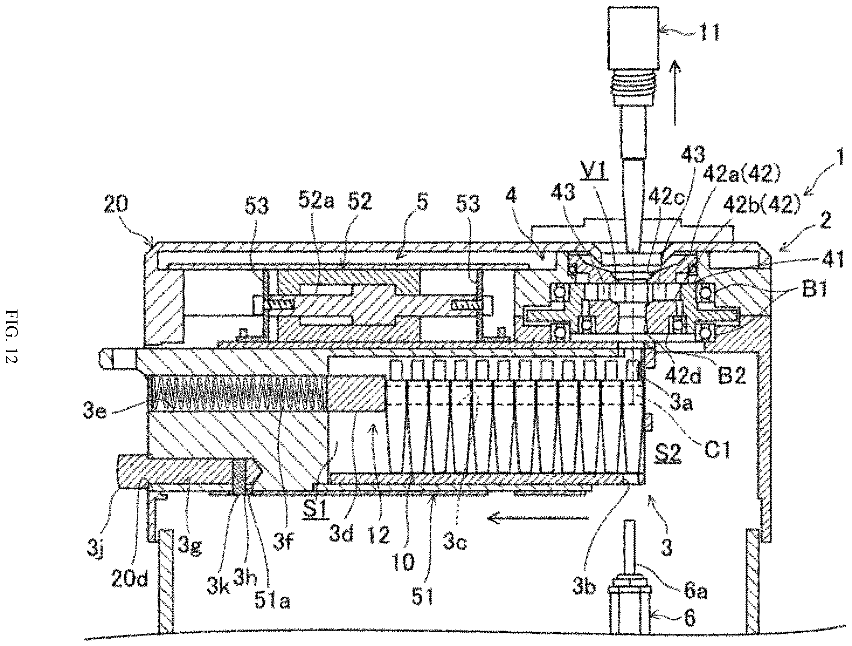

The drive motor then rotates forward to cause the follower gear 41 to rotate relative to the rotation disk 42 in the first direction. In cooperation with the follower gear 41 rotating relative to the rotation disk 42 in the first direction, as shown in FIG. 12, the fitting portions 41a press the basal end portions 43d in the first direction to cause the holders 43 to rotate in the first direction. This moves the second hooks 43c backward from the holding operation space V1 to release the contact tip 10 from the holders 43. The torch body 11 is then moved upward to move the contact tip 10 screwed into the torch body 11 out of the holding operation space V1. This completes the replacement of the contact tip 10.

In the embodiment of the present invention, as described above, the contact tip 10 screwed into the torch body 11 is moved closer to the holder-rotator 4, is held by the holder-rotator 4, and is rotated about its centerline in the first direction to be detached from the torch body 11. When the contact tip 10 detached from the torch body 11 is released from the holder-rotator 4 with the tip case 3 retracted from the tip supplying space S2, the contact tip 10 falls downward through the tip supplying space S2 and is discarded. In contrast, the contact tip 10 stored in the tip case 3 moved into the tip supplying space S2 by the reciprocator 5 is ejected upward from the tip case 3 by the tip ejector 6. The contact tip 10 is then held laterally by the holder-rotator 4, with the torch body 11 moved closer to the holder-rotator 4, and is rotated in the second direction about its centerline to be attached to the torch body 11. As described above, the contact tip replacement device 1 can attach and detach the contact tip 10 at the same position and thus can be compact.

The tip case 3 is attachable to and detachable from the slide 51 in the reciprocator 5. Thus, when all the contact tips 10 stored in the tip case are used after repeated replacement of the contact tips 10, the tip case 3 can be easily replaced with a spare tip case 3 prepared in advance. This facilitates loading of the contact tips 10 on the contact tip replacement device 1, reducing the stop time of the contact tip replacement device 1 and allowing an efficient operation of the contact tip replacement device 1.

The slide 51 reciprocates using the cylinder 52. This simplifies the structure for reciprocating the tip case 3 and reduces the manufacturing cost of the contact tip replacement device 1.

The cylinder 52 as a drive source for reciprocating the tip case 3 is located in an unused space located laterally from the holder-rotator 4 and above the slide 51. Thus, the contact tip replacement device 1 can be more compact.

When the rod 6a in the tip ejector 6 is extended with the tip case 3 moved into the tip supplying space S2 by the reciprocator 5, the rod 6a presses the contact tip 10 upward through the lower opening 3b in the tip case 3, and the contact tip 10 pressed by the rod 6a protrudes from the upper opening 3a in the tip case 3 and reaches the holder-rotator 4. This simple structure can sequentially eject the contact tips 10 stored in the tip case 3.

The tip ejector 6 reciprocates in the same direction as the reciprocator 5 in cooperation with the reciprocator 5 that is reciprocating and can thus be moved to a position at which the tip ejector 6 does not interfere with the contact tip 10 falling from the holder-rotator 4 to be discarded. The tip ejector 6 can be moved using the reciprocator 5 that reciprocates the tip case 3, without adding a dedicated drive source for moving the tip ejector 6, reducing the cost of the contact tip replacement device 1.

When the contact tip 10 is placed in the holding operation space V1 with the follower gear 41 and the rotation disk 42 at their reference positions and then the follower gear 41 rotates relative to the rotation disk 42 in the first direction, the first hooks 43c on the holders 43 move forward into the holding operation space V1 to hold the contact tip 10, and the follower gear 41 and the rotation disk 42 rotate integrally in the first direction about the centerline of the contact tip 10. When the contact tip 10 is placed in the holding operation space V1 with the follower gear 41 and the rotation disk 42 at their reference positions and then the follower gear 41 rotates relative to the rotation disk 42 in the second direction, the second hooks 43c on the holders 43 move forward into the holding operation space V1 to hold the contact tip 10, and the follower gear 41 and the rotation disk 42 rotate integrally in the second direction about the centerline of the contact tip 10. In the manner described above, the contact tip 10 can be held independently of the direction in which the follower gear 41 rotates relative to the rotation disk 42. The follower gear 41 and the rotation disk 42 can rotate about the centerline of the held contact tip 10 while holding the contact tip 10. Thus, the contact tip 10 can be attached to and detached from the torch body 11 by the holder-rotator 4 alone.

When one contact tip 10 is ejected from the tip case 3, the pressing member 3d is guided with an urging force from the coil spring 3f along the guide groove 3c and moves to press the contact tips 10 in the tip case 3 in the direction in which the contact tips 10 are aligned. Thus, the contact tips 10 in the tip case 3 are aligned without gaps between them when one contact tip 10 is ejected from the tip case 3. This structure can efficiently prepare the contact tip 10 to be supplied next.

In the embodiment of the present invention, the reciprocator 5 reciprocates the tip case 3 using the cylinder 52. However, another assembly such as a rack and pinion assembly may reciprocate the tip case 3.

In the embodiment of the present invention, the contact tip 10 is ejected from the tip case 3 with the rod 6a in the tip ejector 6 extending to lift the contact tip 10 in the tip case 3. However, the contact tip 10 may be ejected with another method. For example, the contact tip 10 in the tip case 3 may be gripped and pulled to be ejected.

The tip ejector 6 operates in cooperation with the reciprocator 5 that is reciprocating. However, the tip ejector 6 may operate, without cooperating with the reciprocator 5, using a drive source other than the drive source for the reciprocator 5.

In the embodiment of the present invention, the coil spring 3f serves as an urging member that generates an urging force to press the contact tip 10 in the tip case 3. However, another urging member, such as a rubber member or a cylinder, may be used.

### INDUSTRIAL APPLICABILITY

The present invention is applicable to a contact tip replacement device that automatically replaces a contact tip screwed into a distal end of a torch body of a welding torch for arc welding.

### REFERENCE SIGNS LIST

- 1: contact tip replacement device
- 3: tip case (storage case)
- 3a: upper opening
- 3b: lower opening
- 3c: guide groove
- 3d: pressing member
- 3f: coil spring (urging member)
- 4: holder-rotator
- 5: reciprocator
- 6: tip ejector
- 6a: rod
- 10: contact tip
- 10a: external thread
- 11: torch body
- 12: pressing unit
- 41: follower gear (first rotator)
- 41a: fitting portion
- 42: rotation disk (second rotator)
- 43: holder
- 43c: hook
- 43d: basal end portion
- 51: slide
- 52: cylinder
- 52a: piston rod
- C1: rotation axis
- S1: tip storage
- S2: tip supplying space

## Claims

1. A contact tip replacement device for replacing a contact tip screwed into a torch body, the contact tip replacement device comprising:
a tip supplying space;
a storage case configured to store a plurality of contact tips linearly aligned in a horizontal direction, the plurality of contact tips each having a tip end facing downward and a central axis extending vertically in the storage case;
a reciprocator configured to reciprocate the storage case in a direction in which the plurality of contact tips are aligned to move the storage case into or out of the tip supplying space;
a tip ejector configured to eject a contact tip of the plurality of contact tips upward from the storage case moved into the tip supplying space; and
a holder-rotator above the tip supplying space, the holder-rotator being configured to laterally hold and release the contact tip ejected by the tip ejector, the holder-rotator being configured to rotate the contact tip about the center axis while holding the contact tip to screw the contact tip into the torch body or to detach the contact tip from the torch body.

2. The contact tip replacement device according to claim 1, wherein
the reciprocator includes a slide configured to reciprocate in the horizontal direction, and
the storage case is attachable to and detachable from the slide.

3. The contact tip replacement device according to claim 2, wherein
the reciprocator includes a cylinder including a piston rod connected to the slide, the piston rod is extendable in a direction in which the slide slides, and the piston rod is slidable to reciprocate the storage case.

4. The contact tip replacement device according to claim 3, wherein
the cylinder is located laterally from the holder-rotator and above the slide.

5. The contact tip replacement device according to claim 1, wherein
the tip ejector includes a rod having a rod centerline extending vertically and being extendable and retractable vertically, and
the storage case has, in an upper end of the storage case, an upper opening through which a contact tip of the plurality of contact tips is ejectable, and the storage case has, at a position in a lower end of the storage case aligned with the upper opening, a lower opening connecting with an inside of the storage case to receive the rod being extended when the storage case is in the tip supplying space.

6. The contact tip replacement device according to claim 1, wherein
the tip ejector is connected to the reciprocator and reciprocates in a same direction as the reciprocator in cooperation with the reciprocator reciprocating.

7. The contact tip replacement device according to claim 1, wherein
the holder-rotator includes
a first rotator including a holding operation space having a rotation axis extending vertically at a center of the holding operation space, the first rotator including a plurality of fitting portions arranged about the rotation axis at equal intervals,
a second rotator, the second rotator and the first rotator being rotatable relative to each other about the rotation axis, and
a plurality of holders at positions corresponding to the plurality of fitting portions, each of the plurality of holders being axially supported by the second rotator to pivot about a pivot shaft extending in a same direction as the rotation axis, each of the plurality of holders including a distal end including a pair of hooks spaced from each other circumferentially about the rotation axis and including a basal end portion loosely fitted in a corresponding fitting portion of the plurality of fitting portions, and
in response to the first rotator rotating relative to the second rotator in a first direction from a reference position, each of the plurality of fitting portions presses the basal end portion in the first direction and causes a corresponding holder of the plurality of holders to pivot in the first direction to cause one hook of the pair of hooks to move forward into the holding operation space to hold a contact tip of the plurality of contact tips, and in response to the first rotator rotating relative to the second rotator in a second direction from the reference position, each of the plurality of fitting portions presses the basal end portion in the second direction and causes the corresponding holder to pivot in the second direction to cause another hook of the pair of hooks to move forward into the holding operation space to hold the contact tip of the plurality of contact tips.

8. The contact tip replacement device according to claim 1, wherein
the storage case contains a tip storage to store the plurality of contact tips aligned and a pressing unit pressing the plurality of contact tips aligned in the tip storage toward one end of the storage case, and
the pressing unit includes a guide groove extending in the horizontal direction on an inner surface of the tip storage, a pressing member to be guided along the guide groove, and an urging member configured to urge the pressing member.

## Patentansprüche

1. Kontaktspitzenaustauschvorrichtung zum Austauschen einer Kontaktspitze, die in einen Brennerkörper geschraubt ist, wobei die Kontaktspitzenaustauschvorrichtung umfasst:
einen Spitzenlieferraum;
einen Lagerungskasten, der dazu eingerichtet ist, eine Vielzahl von Kontaktspitzen linear in einer horizontalen Richtung ausgerichtet zu lagern, wobei die Vielzahl von Kontaktspitzen jede ein Spitzenende, das nach unten zugewandt ist, und eine Zentralachse haben, die sich vertikal im Lagerungskasten erstreckt;
eine hin- und herbewegende Vorrichtung, die dazu eingerichtet ist, den Lagerungskasten in einer Richtung hin- und herzubewegen, in der die Vielzahl von Kontaktspitzen ausgerichtet sind, um den Lagerungskasten in den oder aus dem Spitzenlieferraum zu bewegen;
einen Spitzenausstoßer, der dazu eingerichtet ist, eine Kontaktspitze von der Vielzahl von Kontaktspitzen nach oben aus dem Lagerungskasten heraus auszustoßen, der in den Spitzenlieferraum hinein bewegt worden ist; und
einen Halter-Rotator über dem Spitzenlieferraum, wobei der Halter-Rotator dazu eingerichtet ist, die Kontaktspitze, die vom Spitzenausstoßer ausgestoßen wird, seitlich zu halten und freizugeben, wobei der Halter-Rotator dazu eingerichtet ist, die Kontaktspitze um die Mittelachse zu drehen, während die Kontaktspitze gehalten wird, um die Kontaktspitze in den Brennerkörper zu schrauben oder die Kontaktspitze vom Brennerkörper abzunehmen.

2. Kontaktspitzenaustauschvorrichtung nach Anspruch 1, worin
die hin- und herbewegende Vorrichtung einen Schieber umfasst, der dazu eingerichtet ist, sich in der horizontalen Richtung hin- und herzubewegen, und
der Lagerungskasten an dem Schieber anbringbar ist und davon abnehmbar ist.

3. Kontaktspitzenaustauschvorrichtung nach Anspruch 2, worin
die hin- und herbewegende Vorrichtung einen Zylinder umfasst, der eine Kolbenstange umfasst, die mit dem Schieber verbunden ist, die Kolbenstange in einer Richtung ausfahrbar ist, in welcher der Schieber sich verschiebt, und die Kolbenstange verschiebbar ist, um den Lagerungskasten hin- und herzubewegen.

4. Kontaktspitzenaustauschvorrichtung nach Anspruch 3, worin
der Zylinder seitlich vom Halter-Rotator und über dem Schieber gelegen ist.

5. Kontaktspitzenaustauschvorrichtung nach Anspruch 1, worin
der Spitzenausstoßer eine Stange umfasst, die eine Stangenmittellinie hat, die sich vertikal erstreckt und vertikal ausfahrbar und einfahrbar ist, und
der Lagerungskasten, in einem oberen Ende des Lagerungskastens, eine obere Öffnung hat, durch welche eine Kontaktspitze von der Vielzahl von Kontaktspitzen ausstoßbar ist, und der Lagerungskasten, an einer Stellung in einem unteren Ende des Lagerungskastens, die zur oberen Öffnung ausgerichtet ist, eine untere Öffnung hat, die sich mit einem Inneren des Lagerungskastens verbindet, um die Stange aufzunehmen, die ausgefahren ist, wenn der Lagerungskasten im Spitzenlieferraum ist.

6. Kontaktspitzenaustauschvorrichtung nach Anspruch 1, worin
der Spitzenausstoßer mit der hin- und herbewegenden Vorrichtung verbunden ist und sich in einer gleichen Richtung hin- und herbewegt wie die hin- und herbewegende Vorrichtung in Zusammenwirkung mit der hin- und herbewegenden Vorrichtung, die sich hin- und herbewegt.

7. Kontaktspitzenaustauschvorrichtung nach Anspruch 1, worin der Halter-Rotator umfasst:
einen ersten Rotator, der einen Haltebetriebsraum umfasst, der eine Rotationsachse hat, die sich vertikal an einem Zentrum des Haltebetriebsraums erstreckt, wobei der erste Rotator eine Vielzahl von Passabschnitten umfasst, die um die Rotationsachse in gleichen Intervallen angeordnet sind,
einen zweiten Rotator, wobei der zweite Rotator und der erste Rotator relativ zueinander um die Rotationsachse drehbar sind, und
eine Vielzahl von Haltern an Stellungen, die der Vielzahl von Passabschnitten entsprechen, wobei jeder von der Vielzahl von Haltern vom zweiten Rotator axial gestützt ist, um eine Schwenkwelle zu schwenken, die sich in einer gleichen Richtung wie die Rotationsachse erstreckt, wobei jeder von der Vielzahl von Haltern ein distales Ende umfasst, das ein Paar Haken aufweist, die am Umfang um die Rotationsachse voneinander beabstandet sind und einen Grund-Endabschnitt umfassen, der in einem entsprechenden Passabschnitt von der Vielzahl von Passabschnitten lose passend ist, und
als Antwort auf den ersten Rotator, der sich relativ zum zweiten Rotator in einer ersten Richtung von einer Referenzstellung dreht, jeder von der Vielzahl von Passabschnitten den Grund-Endabschnitt in der ersten Richtung drückt und bewirkt, dass ein entsprechender Halter von der Vielzahl von Haltern in der ersten Richtung schwenkt, um zu bewirken, dass ein Haken von dem Paar Haken sich vorwärts in den Haltebetriebsraum hinein bewegt, um eine Kontaktspitze von der Vielzahl von Kontaktspitzen zu halten, und als Antwort auf den ersten Rotator, der sich relativ zum zweiten Rotator in einer zweiten Richtung von einer Referenzstellung dreht, jeder von der Vielzahl von Passabschnitten den Grund-Endabschnitt in der zweiten Richtung drückt und bewirkt, dass der entsprechende Halter in der zweiten Richtung schwenkt, um zu bewirken, dass ein anderer Haken von dem Paar Haken sich vorwärts in den Haltebetriebsraum hinein bewegt, um die Kontaktspitze von der Vielzahl von Kontaktspitzen zu halten.

8. Kontaktspitzenaustauschvorrichtung nach Anspruch 1, worin
der Lagerungskasten eine Spitzenlagerung, um die Vielzahl von Kontaktspitzen ausgerichtet zu lagern, und eine Andruckeinheit, die die Vielzahl von Kontaktspitzen in der Spitzenlagerung ausgerichtet zu einem Ende des Lagerungskastens hin drückt, enthält, und
die Andruckeinheit eine Führungsnut, die sich in der horizontalen Richtung an einer inneren Fläche der Spitzenlagerung erstreckt, ein Andruckelement, das entlang der Führungsnut geführt werden soll, und ein Drängungselement, das dazu eingerichtet ist, das Andruckelement zu drängen, umfasst.

## Revendications

1. Dispositif de remplacement de tube-contact pour remplacer un tube-contact vissé dans un corps de chalumeau, le dispositif de remplacement de tube-contact comprenant :
un espace d'alimentation en tube ;
un boîtier de stockage configuré pour stocker une pluralité de tubes-contacts alignés linéairement dans une direction horizontale, la pluralité de tubes-contacts présentant chacun une extrémité de tube tournée vers le bas et un axe central s'étendant verticalement dans le boîtier de stockage ;
un dispositif de va-et-vient configuré pour faire aller et venir le boîtier de stockage dans une direction dans laquelle la pluralité de tubes-contacts sont alignés pour déplacer le boîtier de stockage dans et hors de l'espace d'alimentation en tube ;
un éjecteur de tube configuré pour éjecter un tube-contact de la pluralité de tubes-contacts vers le haut à partir du boîtier de stockage déplacé dans l'espace d'alimentation en tube ; et
un support-rotateur au-dessus de l'espace d'alimentation en tube, le support-rotateur étant configuré pour maintenir et libérer latéralement le tube-contact éjecté par l'éjecteur de tube, le support-rotateur étant configuré pour faire tourner le tube-contact autour de l'axe central tout en maintenant le tube-contact pour visser le tube-contact dans le corps de chalumeau ou pour détacher le tube-contact du corps de chalumeau.

2. Dispositif de remplacement de tube-contact selon la revendication 1, dans lequel
le dispositif de va-et-vient inclut une coulisseau configurée pour effectuer un mouvement de va-et-vient dans la direction horizontale, et
le boîtier de stockage peut être fixé au coulisseau et détaché de celui-ci.

3. Dispositif de remplacement de tube-contact selon la revendication 2, dans lequel
le dispositif de va-et-vient inclut un cylindre incluant une tige de piston reliée au coulisseau, la tige de piston peut s'étendre dans une direction dans laquelle coulisse le coulisseau, et la tige de piston peut coulisser pour faire aller et venir le boîtier de stockage.

4. Dispositif de remplacement de tube-contact selon la revendication 3, dans lequel
le cylindre est situé latéralement par rapport au support-rotateur et au-dessus du coulisseau.

5. Dispositif de remplacement de tube-contact selon la revendication 1, dans lequel
l'éjecteur de tube inclut une tige présentant une ligne médiane de tige s'étendant verticalement et étant extensible et rétractable verticalement, et le boîtier de stockage présente, dans une extrémité supérieure du boîtier de stockage, une ouverture supérieure à travers laquelle un tube-contact de la pluralité de tubes-contacts est éjectable, et le boîtier de stockage présente, en une position dans une extrémité inférieure du boîtier de stockage alignée sur l'ouverture supérieure, une ouverture inférieure reliée à un intérieur du boîtier de stockage pour recevoir la tige qui s'étend lorsque le boîtier de stockage est dans l'espace d'alimentation en tube.

6. Dispositif de remplacement de tube-contact selon la revendication 1, dans lequel
l'éjecteur de tube est relié au dispositif de va-et-vient et va et vient dans la même direction que le dispositif de va-et-vient en coopération avec le dispositif de va-et-vient.

7. Dispositif de remplacement de tube-contact selon la revendication 1, dans lequel
le support-rotateur inclut
un premier rotateur incluant un espace fonctionnel de maintien présentant un axe de rotation s'étendant verticalement au centre de l'espace fonctionnel de maintien, le premier rotateur incluant une pluralité de parties de fixation agencées autour de l'axe de rotation à intervalles égaux, un second rotateur, le second rotateur et le premier rotateur étant rotatifs l'un par rapport à l'autre autour de l'axe de rotation, et
une pluralité de supports à des positions correspondant à la pluralité de parties de fixation, chacun de la pluralité de supports étant supporté axialement par le second rotateur pour pivoter autour d'un arbre pivot s'étendant dans la même direction que l'axe de rotation, chacun de la pluralité de supports incluant une extrémité distale incluant une paire de crochets espacés l'un de l'autre de manière circonférentielle autour de l'axe de rotation et incluant une partie d'extrémité de base fixée avec jeu dans une partie de fixation correspondante de la pluralité de parties de fixation, et
en réponse à la rotation du premier rotateur par rapport au second rotateur dans un premier sens à partir d'une position de référence, chacune de la pluralité de parties de fixation presse la partie d'extrémité de base dans le premier sens et amène un support correspondant de la pluralité de supports à pivoter dans le premier sens pour amener un crochet de la paire de crochets à se déplacer vers l'avant dans l'espace fonctionnel de maintien pour maintenir un tube-contact de la pluralité de tubes-contacts, et en réponse à la rotation du premier rotateur par rapport au second rotateur dans un second sens à partir de la position de référence, chacune de la pluralité de parties de fixation presse la partie d'extrémité de base dans le second sens et amène le support correspondant à pivoter dans le second sens pour amener un autre crochet de la paire de crochets à se déplacer vers l'avant dans l'espace fonctionnel de maintien pour maintenir le tube-contact de la pluralité de tubes-contacts.

8. Dispositif de remplacement de tube-contact selon la revendication 1, dans lequel
le boîtier de stockage contient un stockage de tubes pour stocker la pluralité de tubes-contacts alignés et une unité de pression pressant la pluralité de tubes-contacts alignés dans le stockage de tubes vers une extrémité du boîtier de stockage, et
l'unité de pression inclut une rainure de guidage s'étendant dans la direction horizontale sur une surface intérieure du stockage de tubes, un élément de pression à guider le long de la rainure de guidage, et un élément de poussée configuré pour pousser l'élément de pression.
